# DEMANDE DE BREVET EUROPEEN

(11) **EP 1 400 745 A1**
(43) Date de publication de la demande: **24.03.2004**
(21) Numéro de dépôt: 02021109.0
(22) Date de dépôt: 23.09.2002
(51) Int. Cl.: F21S 8/00, F21V 13/10

(54) **Dispositif d'éclairage uniforme d'une surface plane**

(71) Demandeur: Belval SA, 2042 Valangin (CH)
(72) Inventeur: Roux, Jean, 2013 Colombier (CH)
(74) Mandataire: North, Mathieu

(57) **Abrégé**

Ce dispositif est destiné à obtenir un éclairement aussi uniforme que possible d'une surface plane, notamment quadrangulaire, et plus particulièrement carrée. Une boîte à lumière (1) comprenant des lampes (2) et un orifice de sortie de la lumière (3) éclaire une surface plane (4). Un masque (5) formé de deux croisillons (6) est placé entre l'orifice de sortie (3) de la lumière et la surface (4) plane à éclairer. Ce masque, parallèle à la surface à éclairer, a la forme d'une croix, les croisillons formant un angle droit entre eux. Le dispositif est notamment utilisable pour tester des cellules photovoltaïques.

## Description

La présente invention se rapporte au domaine des dispositifs visant à fournir un éclairement aussi uniforme que possible d'une surface plane. De tels dispositifs sont utilisés notamment pour éprouver les qualités de cellules photovoltaïques. Ces essais exigent en effet une répartition aussi uniforme que possible de la lumière sur la surface des cellules examinées. De tels dispositifs peuvent également être utilisés dans les arts graphiques, dans les domaines où on emploie l'exposition photographique, par exemple l'exposition de plaques dans le procédé offset.

On connaît des dispositifs d'éclairage uniforme de surfaces planes comprenant une boîte à lumière, pourvue d'un orifice de sortie de la lumière, dont les parois internes sont uniformément blanches et dans laquelle une ou plusieurs lampes sont placées de façon que la surface à éclairer ne soit touchée que par la lumière réfléchie sur ces parois internes, et non par la lumière directe de la ou des lampes. La surface plane à éclairer est placée parallèlement au plan de l'orifice de sortie. A la normale de l'orifice de sortie, c'est-à-dire à l'endroit où les rayons la frappent à angle droit, la surface plane à éclairer reçoit plus de lumière qu'aux endroits plus éloignés, que la lumière frappe avec un angle d'incidence. On compte que, aux emplacements de la surface plane à éclairer sur lesquels la lumière arrive avec un angle de 20° par rapport à la normale, la quantité de lumière reçue est inférieure de 22% à celle que reçoit l'emplacement situé à la normale de l'orifice de sortie. Dans le cas d'une surface plane carrée dont le centre est placé en face, c'est-à-dire à la normale de l'orifice de sortie de la lumière, les quatre angles reçoivent une quantité de lumière largement inférieure à celle reçue par le centre.

Afin d'atténuer cette disparité d'éclairement, on éloigne la source de lumière de la surface à éclairer, de façon que l'angle d'incidence des rayons sur la surface soit aussi faible que possible. C'est ainsi que, pour vérifier des cellules photovoltaïques, la distance entre le panneau porteur des cellules et la source de lumière est couramment de l'ordre de huit mètres. L'inconvénient évident d'un tel procédé est la place considérable prise par ce dispositif. Un autre inconvénient est que la distribution de la lumière n'est pas uniforme sur toute la surface, malgré l'éloignement de la source.

La présente invention vise à obtenir une amélioration sensible de la répartition de la lumière sur la surface plane éclairée et une diminution de la distance nécessaire entre la source de lumière et ladite surface plane. Elle vise aussi à une utilisation d'un tel dispositif amélioré dans l'éclairage de surfaces planes quadrangulaires, ainsi qu'à une utilisation dans les processus de vérification des qualités des cellules photovoltaïques.

Le dispositif d'éclairage d'une surface plane, objet de l'invention, comprend au moins une boîte à lumière et un masque de compensation La source de lumière présente une surface limitée par le contour de l'orifice de sortie de la boîte à lumière.

Sa forme peut être circulaire, mais pour des compensations plus fines, il peut être avantageux de lui donner une forme plus complexe.

Le masque de compensation est placé de telle sorte et présente une forme telle que le rapport entre l'aire apparente d'émission de lumière et la surface de la partie du masque visible à l'intérieur du pourtour apparent de l'orifice de sortie de la lumière varie selon le point occupé par un observateur placé sur la surface plane à éclairer.

Le ou les masques de compensation doivent être placés dans d'autres plans que l'orifice de la boîte à lumière, de préférence intercalés entre l'orifice de la boîte à lumière et la surface à éclairer.

Pour des raisons de simplification, il est également possible de placer les masques à l'intérieur de la boîte à lumière, ou de les sérigraphier directement sur le fond de la boîte à lumière.

Le principe de la présente invention consiste à masquer une plus grande proportion de l'orifice de sortie pour la lumière atteignant le centre de la surface à éclairer que pour la lumière atteignant les bords de ladite surface.

La superposition de l'orifice de sortie et des masques varie, pour un observateur placé sur la surface à éclairer, en fonction de l'angle "d'observation" par rapport à l'axe optique, c'est-à-dire par rapport à l'axe normal à la surface à éclairer et passant par le centre de l'orifice de sortie de la lumière.

Des formes et des emplacements judicieusement choisis pour l'orifice de la boîte à lumière et pour les masques permettent d'atteindre ce but avec une grande précision.

Dans une première forme d'exécution particulière de l'invention, le masque de compensation est un dessin non réfléchissant tracé sur le fond de la boîte à lumière.

Dans une deuxième forme d'exécution, le masque de compensation est un corps placé dans la boîte à lumière, entre le fond et l'orifice de sortie de la lumière.

Dans une troisième forme d'exécution, le masque de compensation est un corps apte à être intercalé entre l'orifice de sortie de la lumière et la surface plane à éclairer.

Dans une quatrième forme d'exécution particulière de l'invention, qui peut s'appliquer aux deux précédentes, le masque de compensation est opaque.

Dans une cinquième forme d'exécution, qui peut inclure toutes les précédentes, le masque de compensation, une fois mis en place, présente, en projection normale sur la surface plane à éclairer, au moins une partie de forme oblongue.

Dans une sixième forme d'exécution, qui peut inclure les précédentes formes d'exécution, le masque de compensation est formé de plusieurs croisillons qui, une fois mis en place, présentent , en projection normale sur la surface plane à éclairer, la forme d'une croix ou d'une étoile.

Dans une septième forme d'exécution, applicable aux six précédentes, le masque de compensation est formé de deux croisillons perpendiculaires l'un à l'autre.

Dans une huitième forme d'exécution, qui peut s'appliquer aux deux précédentes, les deux croisillons formant le masque de compensation sont placés dans un même plan, formant ainsi une croix.

Dans une neuvième forme d'exécution, qui peut s'appliquer de la deuxième à la septième forme d'exécution précédente, les deux croisillons formant le masque ne sont pas dans un même plan.

Dans une dixième forme d'exécution, applicable aux neuf premières, le masque de compensation comprend au moins une partie allongée présentant des côtés parallèles l'un à l'autre.

Dans une onzième forme d'exécution, applicable aux neuf premières, le masque de compensation comprend au moins une partie allongée présentant des côtés non parallèles l'un à l'autre.

Dans une douzième forme d'exécution, applicable également de la sixième à la dixième, les côtés de chacun des croisillons formant le masque de compensation sont parallèles l'un à l'autre.

Dans une treizième forme d'exécution, applicable également de la sixième à la neuvième et à la onzième, les côtés de chacun des croisillons formant le masque de compensation ne sont pas parallèles entre eux.

Dans une quatorzième forme d'exécution, qui est également applicable aux treize premières, la boîte à lumière comprend au moins une boîte, au moins une lampe et au moins un orifice de sortie, la ou les lampes étant disposées dans la boîte de manière à éviter tout éclairage direct de la surface plane à éclairer.

Dans une première forme d'application d'un dispositif selon l'invention, dans sa forme générale ou dans l'une des quatorze formes d'exécution particulière susmentionnées, le dispositif est utilisé pour l'éclairage d'une surface quadrangulaire.

Dans une seconde forme d'application d'un dispositif selon l'invention, particulièrement dans sa première ou dans l'une de ses sixième à quatorzième formes d'exécution particulières susmentionnées, le dispositif est utilisé pour l'éclairage d'une surface carrée.

Dans une troisième forme d'application d'un dispositif selon l'invention, particulièrement applicable à la première ou à l'une des neuvième à quatorzième formes d'exécution susmentionnées, le dispositif est utilisé pour l'éclairage d'une surface rectangulaire.

Dans une quatrième forme d'application du dispositif, qui peut inclure toutes les applications précédentes, le dispositif est utilisé pour vérifier des cellules photovoltaïques.

La figure 1 est une vue de dessus d'un dispositif selon l'invention, éclairant une surface plane, avec une boîte à lumière représentée schématiquement en coupe horizontale et pourvue de deux lampes.

La figure 2 est une vue de l'orifice de sortie de la boîte à lumière et du masque de compensation placé devant, prise depuis le centre de la surface plane à éclairer.

La figure 3 est une vue de l'orifice de sortie de la boîte à lumière et du masque de compensation placé devant, prise depuis un coin de la surface ; dans cette forme d'exécution, les deux croisillons formant le masque sont dans un même plan.

La figure 4 est une simplifiée en perspective cavalière d'un dispositif selon l'invention, dans lequel le masque est une simple bande placée verticalement entre la boîte à lumière et la surface à éclairer, qui est une bande placée horizontalement.

La figure 5 montre les résultats de la compensation du dispositif illustré par la figure 4.

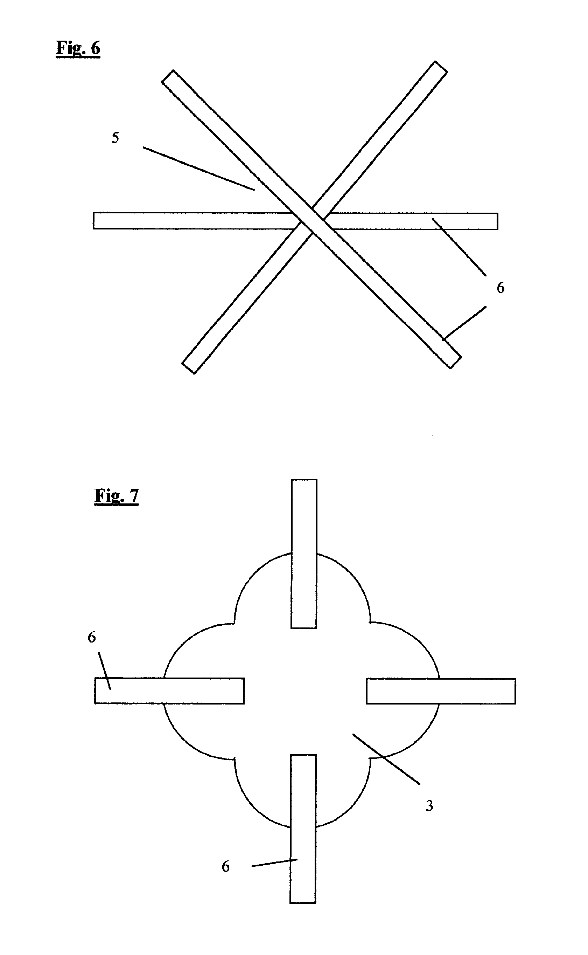

La figure 6 montre un masque de compensation pour un dispositif selon l'invention, qui est en forme d'étoile.

La figure 7 montre un masque de compensation selon l'invention placé devant un orifice de sortie de la lumière qui a une forme non circulaire, le masque de compensation étant en forme de croix, mais sans centre.

La figure 8 montre un masque de compensation du même type que celui de la figure 7, mais dont les croisillons ne sont pas rectilignes ni parallèles, alors que l'orifice de sortie de la lumière est circulaire, de manière classique.

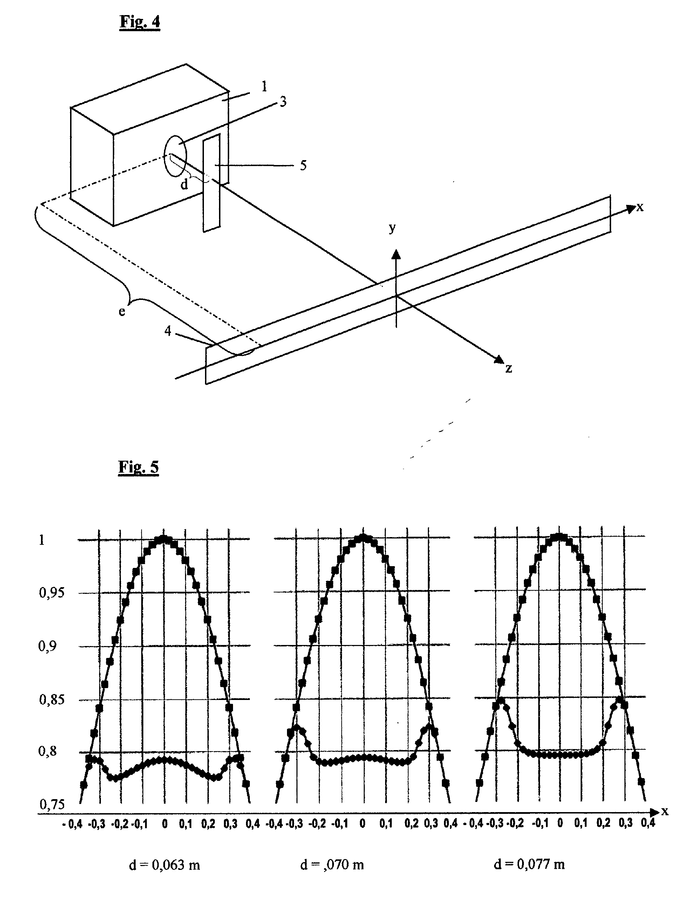

Pour montrer le fonctionnement du dispositif, on peut imaginer une exécution simplifiée qui ne compense l'éclairement que selon un seul axe perpendiculaire à l'axe optique. Cette forme d'exécution est montrée à la figure 4.

L'orifice de la boîte à lumière est circulaire.

Le masque 5 le plus simple, permettant d'obtenir une compensation approximative, serait constitué d'une bande opaque, à bords parallèles, plus étroite que le diamètre de l'orifice 3 de la boîte à lumière 1, et plus longue que le diamètre de l'orifice de la boîte à lumière, l'axe optique traversant cette bande opaque perpendiculairement par son milieu.

Les trois graphiques de la figure 5 comparent chacun la quantité de lumière reçue le long de l'axe X de la surface 4 de la figure 4 , la quantité de lumière étant portée en ordonnée, et la distance au centre (point 0 de chaque graphique) en abscisse ; les courbes du haut représentent l'éclairement sans le masque de compensation 5 , et les trois courbes inférieures l'éclairement avec le masque de compensation 5 placé à trois distances d différentes de l'orifice de sortie 3 (respectivement 0.063 m , 0.070 m et 0.077m ). On peut constater que pour éclairer une bande de 0.2 m de long ( X compris entre -0.1 et +0.1 ), la distance d source - masque de 0.077 m est la plus favorable, la courbe inférieure étant presque plate, dans cet intervalle de-0.1 m à +0.1 m . Pour éclairer une bande de 0.4 m de long, c'est la distance d source - masque de 0.070 m qui serait la plus favorable, la distance e entre la source de lumière et la surface 4 à éclairer étant de 1 m et le diamètre de l'orifice de sortie de la lumière 3 étant de 4 cm. Dans l'exemple montré à la figure 4, les proportions entre les distances ne sont pas respectées, car la distance d serait trop petite sur le dessin. Il en irait de même de la largeur du masque, qui est de l'ordre de 7 mm en réalité, et qui est présentée proportionnellement beaucoup plus grande sur le dessin.

La courbe supérieure des graphiques de la figure 5 montre que, sans l'interposition du masque 5, qui compense l'effet d'éloignement, le pourcentage de lumière reçue décroît fortement avec la distance. La courbe inférieure montre que ce pourcentage reste à peu près constant, dans une plage limitée, de part et d'autre de l'axe optique Z .

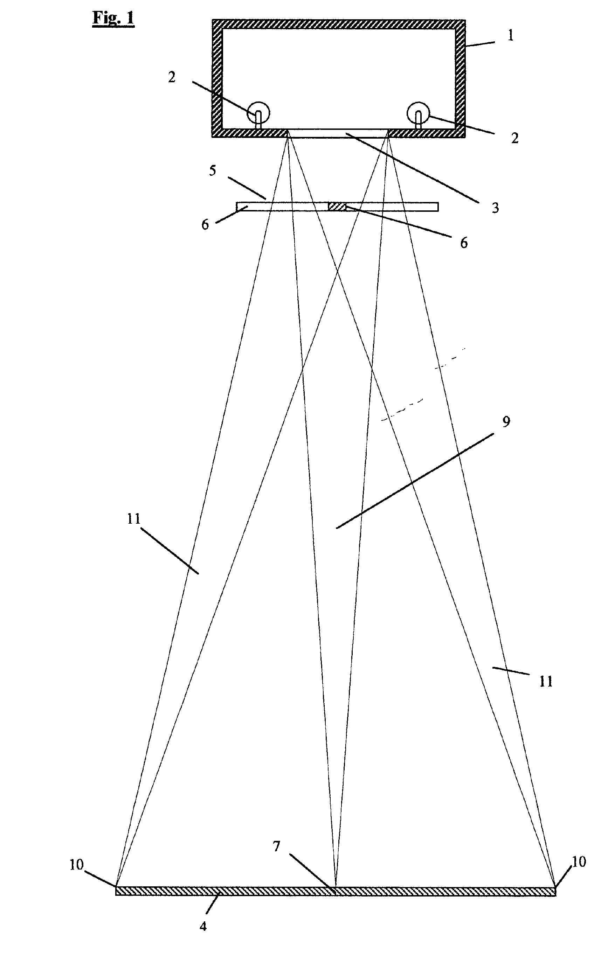

La forme préférée de l'invention, illustrée par la figure 1, est décrite ci-après. Le dispositif comprend une boîte à lumière 1, dont les parois internes sont uniformément blanches, la boîte comprenant elle-même de préférence plusieurs lampes 2 et présentant au moins un orifice de sortie 3 de la lumière. Le plan de l'orifice de sortie 3 est placé parallèlement à la surface plane 4 à éclairer. Les lampes 2 sont disposées dans la boîte de manière à éviter toute lumière directe sur la surface plane 4. Un ou plusieurs masques de compensation 5 sont intercalés entre l'orifice de sortie 3 et la surface plane 4 à éclairer. Les paramètres permettant d'agir sur l'éclairement de la surface en vue d'obtenir une uniformité aussi grande que possible sont la forme et la dimension du ou des orifices de sortie 3, la ou les distances, d'une part, entre l'orifice et le ou les masques 5 et d'autre part entre le ou les masques 5 et la surface plane 4 à éclairer, et enfin la forme et les dimensions du ou des masques 5. L'orifice de sortie 3 de la lumière sera de préférence unique et circulaire, forme qui présente l'avantage de la simplicité pour les calculs, et qui est favorable dans le cas des surfaces à éclairer carrées. Un ajustement mécanique, selon les trois axes (x, y et z), de la position des masques permet de pallier, en grande partie, de petits défauts d'exécution de la boîte à lumière, qui pourraient affecter l'uniformité de manière imprévisible.

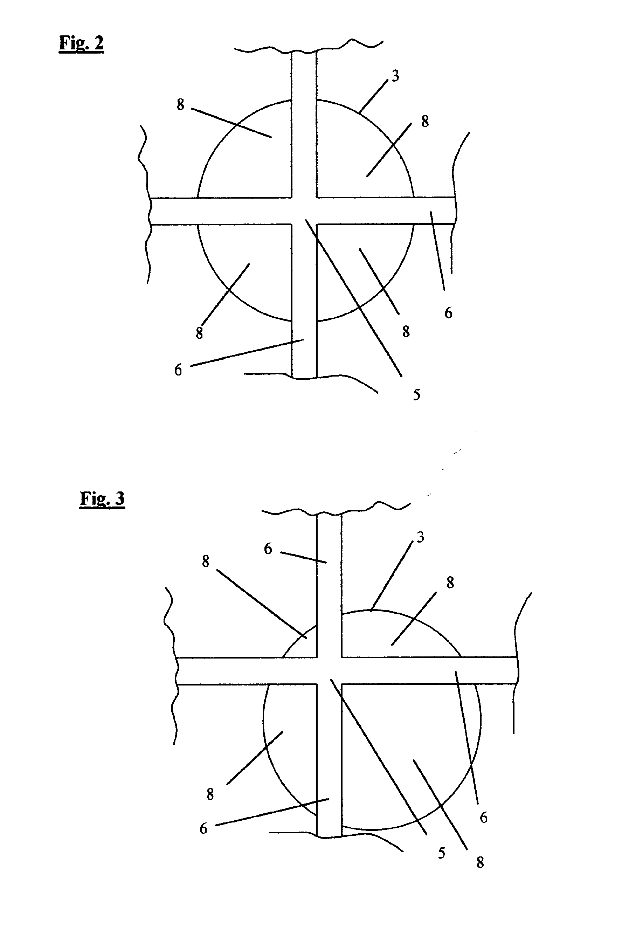

Quant à la forme du ou des masques, elle est telle que la projection normale du masque sur la surface plane 4 à éclairer ait, dans cette forme d'exécution préférée, la forme d'une croix. Dans la forme d'exécution préférée de l'invention, le masque est formé de deux croisillons 6 qui se croisent à 90°. D'autres formes peuvent être choisies, selon la forme de la surface à éclairer. Pour une surface quadrangulaire, cette forme à quatre branches convient parfaitement. Dans la forme d'exécution préférée et qui est représentée dans les figures 1 à 3, les deux croisillons sont dans le même plan, parallèles à la surface plane 4 à éclairer et au plan de l'orifice de sortie 3 de la lumière. Cette forme convient fort bien à une surface à éclairer carrée. Pour une surface rectangulaire, il est préférable que les croisillons ne soient pas dans le même plan. Autrement dit, l'un des deux croisillons sera plus proche de l'orifice de sortie que l'autre, leur projection normale sur la surface plane 4 formant toujours une croix, de préférence à angle droit, sur ladite surface. La figure 1 montre la boîte à lumière 1, avec ses deux lampes 2, placées dans des angles de la boîte. La boîte est placée à une distance telle de la surface à éclairer 4 que les rayons directs de la lumière des lampes ne tombent pas sur cette surface. Dans la forme d'exécution montrée à la figure 1, la surface à éclairer 4 est carrée. Si l'on regarde l'orifice de sortie 3 de la boîte à lumière depuis le centre 7 de la surface à éclairer 4, c'est-à-dire dans le cône de vision 9, on voit le masque 5 et l'orifice de sortie 3 de la manière représentée à la figure 2, c'est-à-dire que le masque forme une croix superposée à l'orifice de sortie rond et sépare cet orifice rond en quatre quartiers 8 égaux, le centre de la croix et le centre de l'orifice étant confondus. Si l'on regarde l'orifice de sortie 3 depuis l'un des coins 10 de la surface plane à éclairer 4, c'est-à-dire dans le cône de vision 11, on voit le masque 5 décentré par rapport à l'orifice de sortie rond (qui devrait apparaître ici, compte tenu de l'effet de perspective, sous une forme à peu près elliptique, mais que l'on a représenté rond pour des raisons de simplification), de sorte que cet orifice est partagé par la croix formant le masque en quatre quartiers 8 inégaux. On constate également que la surface de l'orifice recouverte par les branches de la croix formant le masque est moindre dans ce deuxième cas que dans le cas d'une observation faite depuis le centre 7. Autrement dit, les rayons de lumière partant de l'orifice de sortie 3 vers les coins 10, moins denses que ceux qui partent vers le centre 7, seront aussi empêchés de parvenir sur la surface 4 dans une proportion moindre que les rayons partant en direction du centre de cette surface. Plus le point éclairé est éloigné du centre 7 de la surface 4, plus la proportion de rayons retenus par le masque est réduite

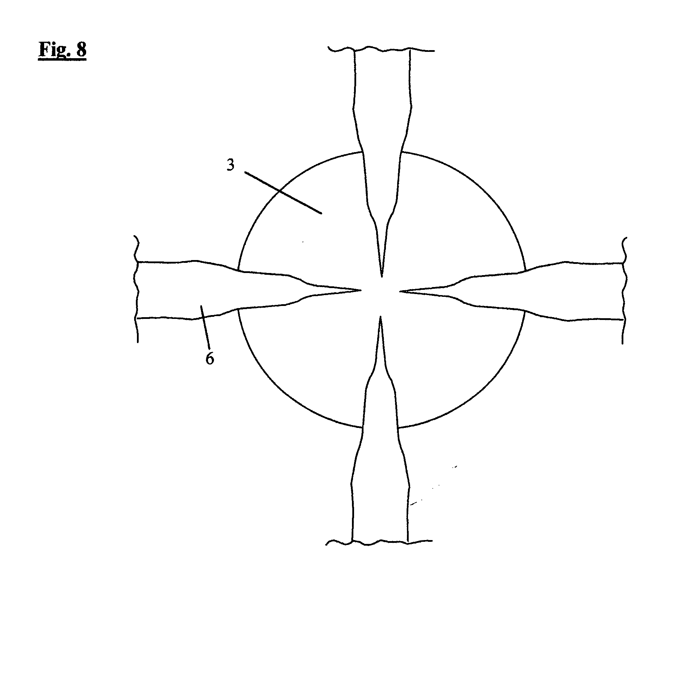

Dans la forme d'exécution préférée montrée ici dans les figures 1 à 3, les deux croisillons 6 sont d'égale largeur et les bords de chacun des croisillons sont parallèles l'un à l'autre. Il peut cependant être utile que les croisillons 6 aient une largeur variant avec l'éloignement par rapport au centre ; selon les cas, on peut utiliser des croisillons à bords droits non parallèles, ou même courbes. Un exemple de ce genre est montré à la figure 8. De même, dans la forme d'exécution préférée, les deux croisillons ont une largeur égale ; il peut être utile, selon les cas, de leur donner une largeur différente, ce qui peut s'avérer utile dans le cas où les deux croisillons ne sont pas dans un même plan, notamment pour l'éclairage d'une surface rectangulaire.

L'invention est utilisable notamment dans la vérification des qualités de cellules photovoltaïques et, plus généralement, dans tous les domaines requérant un éclairement aussi uniforme que possible d'une surface plane, particulièrement rectangulaire.

## Revendications

1. Dispositif d'éclairage uniforme d'une surface plane, comprenant au moins une boîte à lumière et un masque de compensation (5), **caractérisé en ce que** le masque de compensation est placé de telle sorte et présente une forme telle que le rapport entre l'aire apparente d'émission de lumière et la surface de la partie du masque visible à l'intérieur du pourtour apparent de l'orifice de sortie (3) de la lumière varie selon le point occupé par un observateur sur la surface à éclairer (4).

2. Dispositif selon la revendication 1, **caractérisé en ce que** le masque de compensation (5) est un dessin non réfléchissant tracé sur le fond de la boite à lumière.

3. Dispositif selon la revendication 1, **caractérisé en ce que** le masque de compensation (5) est un corps placé dans la boite à lumière, entre le fond et l'orifice de sortie (3) de la lumière

4. Dispositif selon la revendication 1, **caractérisé en ce que** le masque de compensation (5) est un corps apte à être intercalé entre l'orifice de sortie (3) de la lumière et la surface plane à éclairer (4)

5. Dispositif selon l'une des revendications 3 ou 4, **caractérisé en ce que** le masque de compensation (5) est opaque

6. Dispositif selon l'une des revendications 1 à 5, **caractérisé en ce que** le masque de compensation (5), une fois mis en place, présente, en projection normale sur la surface plane à éclairer (4), au moins une partie de forme oblongue.

7. Dispositif selon l'une des revendications 1 à 6, **caractérisé en ce que** le masque de compensation (5) est formé de plusieurs croisillons (6) qui, une fois mis en place, présentent, en projection normale sur la surface plane à éclairer (4), la forme d'une croix ou d'une étoile.

8. Dispositif selon la revendication 7, **caractérisé en ce que** le masque de compensation (5) est formé de deux croisillons (6) qui sont perpendiculaires l'un à l'autre.

9. Dispositif selon l'une des revendications 1 ou 3 à 8, **caractérisé en ce que** les deux croisillons (6) formant le masque de compensation sont dans un même plan.

10. Dispositif selon l'une des revendications 1 ou 3 à 8, **caractérisé en ce que** les deux croisillons (6) formant le masque de compensation ne sont pas dans un même plan.

11. Dispositif selon l'une des revendications 1 à 10, **caractérisé en ce que** le masque de compensation comprend au moins une partie allongée présentant des côtés parallèles l'un à l'autre.

12. Dispositif selon l'une des revendications 1 à 10, **caractérisé en ce que** le masque de compensation (5) comprend au moins une partie allongée présentant des côtés non parallèles l'un à l'autre.

13. Dispositif selon l'une des revendications 7 à 11, **caractérisé en ce que** les côtés de chacun des croisillons (6) formant le masque compensatoire (5) sont parallèles l'un à l'autre.

14. Dispositif selon l'une des revendications 7 à 10 ou 12, **caractérisé en ce que** les côtés de chacun des croisillons (6) formant le masque compensatoire ne sont pas parallèles l'un à l'autre.

15. Dispositif selon l'une des revendications 1 à 14, **caractérisé en ce que** boîte à lumière comprend au moins une boîte (1), au moins une lampe (2) et au moins un orifice de sortie (3), la ou les lampes étant disposées dans la boîte de manière à éviter tout éclairage direct de la surface plane à éclairer (4).

16. Utilisation d'un dispositif selon l'une des revendications 1 à 15 pour l'éclairage d'une surface quadrangulaire.

17. Utilisation d'un dispositif selon l'une des revendications 2 ou 7 à 15 pour l'éclairage d'une surface carrée.

18. Utilisation d'un dispositif selon l'une des revendications 2 ou 10 à 15 pour l'éclairage d'une surface rectangulaire.

19. Utilisation d'un dispositif selon l'une des revendications 1 à 15 pour tester des cellules photovoltaïques.
